(19) Europäisches Patentamt
European Patent Office
Office européen des brevets

(11) **EP 3 075 906 B1**

(12) **EUROPÄISCHE PATENTSCHRIFT**

(45) Veröffentlichungstag und Bekanntmachung des Hinweises auf die Patenterteilung:
**12.09.2018  Patentblatt 2018/37**

(21) Anmeldenummer: **16163259.1**

(22) Anmeldetag: **31.03.2016**

(51) Int Cl.:
*D21H 23/78* (2006.01)     *B29B 15/12* (2006.01)
*F26B 25/22* (2006.01)     *D06B 23/24* (2006.01)
*G05D 22/00* (2006.01)     *F26B 13/00* (2006.01)
*G05D 22/02* (2006.01)

(54) **IMPRÄGNIERANLAGE UND VERFAHREN ZU DEREN ÜBERWACHUNG**

IMPREGNATION SYSTEM AND METHOD FOR MONITORING THE SAME

INSTALLATION D'IMPREGNATION ET SON PROCEDE DE SURVEILLANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2015  DE 102015105039**

(43) Veröffentlichungstag der Anmeldung:
**05.10.2016  Patentblatt 2016/40**

(73) Patentinhaber: **Fritz Egger GmbH & Co. OG**
**6380 St. Johann in Tirol (AT)**

(72) Erfinder: **Vorreiter, Bernhard**
**5741 Neukirchen (AT)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**WO-A1-98/44201     DE-A1- 2 828 005**
**DE-A1- 19 710 549     DE-A1-102010 052 044**

EP 3 075 906 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**EP 3 075 906 B1**

## Beschreibung

Die Erfindung betrifft eine Imprägnieranlage, eingerichtet zum Imprägnieren einer entlang einer Prozessstrecke durch die Imprägnieranlage laufenden Papierbahn, insbesondere einer Dekorpapierbahn. Weiterhin betrifft die Erfindung ein Verfahren zur Überwachung einer solchen Imprägnieranlage.

Derartige Imprägnieranlagen werden im Stand der Technik insbesondere zum Imprägnieren von Dekorpapieren für Laminate verwendet, wie sie beispielsweise zur Herstellung von Fußbodenpaneelen eingesetzt werden.

Beim Imprägnieren wird eine mit einem Dekor versehene Papierbahn in eine derartige Imprägnieranlage geführt und dort mit einer oder mehreren Harzmischungen beaufschlagt. Nach der Beaufschlagung mit Harz erfolgt typischerweise noch eine Trocknung der Papierbahn, um eine bestimmte Restfeuchte einzustellen. Die auf diese Weise mit Harz getränkte, d.h. imprägnierte Papierbahn wird auch als Imprägnat bezeichnet. Das Imprägnat kann dann in nachfolgenden Prozessschritten beispielsweise mit einem Overlaypapier und/oder einem Paneelsubstrat zu einem Laminat verpresst werden.

Die Menge des beim Imprägnieren auf die Papierbahn aufgebrachten Harzes und die durch das Trocknen erreichte Restfeuchte der Papierbahn hängen unter anderem von der Beschaffenheit des Papiers und von der Beschaffenheit des auf der Papierbahn aufgebrachten Dekors ab. Für die Qualität und die Weiterverarbeitbarkeit der imprägnierten Papierbahn ist es wichtig, die aufgebrachte Harzmenge und die Restfeuchte des Papiers, d.h. die Feuchte des Papiers nach der Imprägnierung, jeweils in einem vorgegebenen Sollbereich zu halten. Aus diesem Grund muss der Imprägnierprozess in der Imprägnieranlage genau überwacht werden.

Zu diesem Zweck werden im Stand der Technik bei laufendem Imprägnierprozess zu bestimmten Zeitabständen Proben aus der durch die Imprägnieranlage laufenden Papierbahn geschnitten, und zwar typischerweise an einer Stelle, an der die Papierbahn die Imprägnieranlage verlassen und somit vollständig durchlaufen hat. Diese Proben werden dann im Labor unter anderem durch Trocknung und Wägung überprüft.

Diese Vorgehensweise hat jedoch mehrere Nachteile. Zunächst ist diese Laboruntersuchung relativ arbeitsaufwendig und dauert vergleichsweise lange. Während dieser Zeit läuft der Imprägnierprozess an der Imprägnieranlage unverändert weiter, so dass bis zur Feststellung im Labor, dass die entnommene Probe von den Sollwerten abweicht, erheblicher Ausschuss produziert wird. Weiterhin ist die Laborprüfung fehleranfällig und ihre Qualität hängt stark von den Fähigkeiten des Laborpersonals ab.

Bei Produktionsanlagen mit Rollenware, bei denen die Papierbahn nach der Imprägnierung nicht auf Länge geschnitten, sondern zu einer Rolle aufgewickelt wird, ist noch dazu keine laborbegleitende Prüfung möglich, da während der Rollenproduktion keine Proben entnommen werden können. Laborprüfungen sind daher erst nach Abschluss der Rollenproduktion möglich, so dass bei Abweichungen von den gewünschten Sollwerten des Imprägnierprozesses nicht mehr reagiert werden kann und gegebenenfalls die gesamte Rolle als Ausschuss entsorgt werden muss.

In der Vergangenheit wurde daher versucht, anstelle einer Probenentnahme an der Papierbahn nach Durchlaufen der Imprägnieranlage, stattdessen ein Messgerät an der bisherigen Probenentnahmestelle vorzusehen, um die Eigenschaften der durch die Imprägnieranlage gelaufenen Papierbahn online überwachen zu können. Hierbei konnte jedoch keine praktikable und funktionierende Lösung zur Online-Messung der Restfeuchte oder der Beharzung der imprägnierten Papierbahn gefunden werden. Insbesondere erforderten die getesteten Systeme eine extrem aufwendige laufende Kalibrierung, die einen praktischen Einsatz der Systeme verhinderte.

Es wurde insbesondere festgestellt, dass bereits kleine Änderungen an den Eigenschaften des Rohpapiers, d.h. des Papiers vor dem Imprägnieren, oder an der Harzrezeptur dazu führen, dass die mit dem Messgerät ermittelten Werte für die Restfeuchte oder die Beharzung nicht mehr stimmen. Weiterhin zeigte sich auch eine erhebliche Abhängigkeit der Messergebnisse von der Art des eingesetzten Dekors. Da auf derselben Imprägnieranlage jedoch häufig Papierbahnen mit hunderten oder sogar tausenden verschiedenen Dekoren imprägniert werden, erwies sich eine Dekorabhängige Kalibrierung der Messdaten als praktisch unmöglich.

Vor diesem Hintergrund liegt der vorliegenden Erfindung die Aufgabe zugrunde, eine Imprägnieranlage und ein Verfahren zu deren Überwachung zur Verfügung zu stellen, mit denen eine praktikable Online-Messung einer Eigenschaft der durch die Imprägnieranlage laufenden Papierbahn ermöglicht wird.

Diese Aufgabe wird bei einer Imprägnieranlage, eingerichtet zum Imprägnieren einer entlang einer Prozessstrecke durch die Imprägnieranlage laufenden Papierbahn, insbesondere mit mindestens einem Harz, erfindungsgemäß dadurch gelöst, dass die Imprägnieranlage einen Sensor aufweist, der dazu eingerichtet ist, an einer ersten Position in der Prozessstrecke ein erstes optisches Spektralsignal von der durch die Imprägnieranlage laufenden Papierbahn zu erfassen, und dass die Imprägnieranlage Berechnungsmittel aufweist, die dazu eingerichtet sind, ein Maß für eine Eigenschaft der durch die Imprägnieranlage laufenden Papierbahn abhängig von dem ersten optischen Spektralsignal zu berechnen. Bei der Papierbahn kann es sich insbesondere um eine Dekorpapierbahn handeln.

Weiterhin wird die zuvor genannte Aufgabe erfindungsgemäß gelöst durch ein Verfahren zur Überwachung einer Imprägnieranlage, die dazu eingerichtet ist, eine entlang einer Prozessstrecke durch die Imprägnieranlage laufende Papierbahn zu imprägnieren, insbesondere zur Überwachung der zuvor genannten Imprägnieranlage, bei dem an einer ersten Position in der Prozessstrecke ein erstes optisches Spektralsignal von der durch die Imprägnieranlage laufenden Papierbahn, insbesondere Dekorpapierbahn, erfasst wird, und bei dem ein Maß für die Eigenschaft der durch die Imprägnieranlage laufenden Papierbahn abhängig von dem ersten optischen Spektralsignal berechnet wird. Die Imprägnieranlage ist insbesondere dazu eingerichtet, die entlang der Prozessstrecke durch die Imprägnieranlage laufende Papierbahn mit mindestens einem Harz zu imprägnieren. Insbesondere weist die Imprägnieranlage mindestens eine Imprägnierstation auf, die dazu eingerichtet ist, die Papierbahn mit einem Harz zu beaufschlagen.

Es wurde festgestellt, dass sich eine Eigenschaft der durch die Imprägnieranlage laufenden Papierbahn mit ausreichender Zuverlässigkeit durch die Auswertung eines optischen Spektralsignals bestimmen lässt. Insbesondere hat sich gezeigt, dass die in einem solchen optischen Spektralsignal enthaltenen Informationen über die Papierbahn die Bestimmung eines Maßes für eine Eigenschaft der Papierbahn erlauben.

Die Imprägnieranlage ist insbesondere zur Herstellung imprägnierter Papierbahnen für die Laminatherstellung, beispielsweise für die Möbel- oder Paneelherstellung, eingerichtet.

Unter einem optischen Spektralsignal von der Papierbahn wird ein optisches Signal verstanden, das wellenlängenabhängige Informationen der Papierbahn enthält. Beispielsweise kann es sich bei dem optischen Signal um das von der Papierbahn gestreute bzw. reflektierte Licht bei einer bestimmten Wellenlänge oder in einem bestimmten Wellenlängenbereich handeln. Vorzugsweise umfasst ein optisches Spektralsignal Signale von mindestens zwei verschiedenen Wellenlängen oder von einem (vorzugsweise kontinuierlichen) Wellenlängenbereich.

Unter dem Erfassen eines optischen Spektralsignals wird verstanden, dass das optische Spektralsignal von dem Sensor wellenlängenspezifisch erfasst wird, so dass sich die wellenlängenabhängigen Informationen der Papierbahn aus dem optischen Spektralsignal extrahieren lassen. Das optische Spektralsignal kann insbesondere als Spektrum, d.h. als wellenlängenabhängige Intensitätsverteilung, erfasst werden.

Zu diesem Zweck kann der Sensor beispielsweise ein Spektrometer umfassen, das dazu eingerichtet ist, ein optisches Spektralsignal wellenlängenaufgelöst zu erfassen. Beispielsweise kann der Sensor einen Messkopf aufweisen, der an einer Position ein optisches Spektralsignal von der Papierbahn erfasst und dieses z.B. über einen Lichtleiter an ein Spektrometer weiterleitet, mit dem sich die wellenlängenabhängigen Informationen aus dem Signal extrahieren lassen.

Zusätzlich oder alternativ kann der Sensor auch ein oder mehrere optische Filter umfassen, mit denen bestimmte Wellenlängenbereiche aus einem optischen Signal extrahiert werden können. Alternativ kann die Papierbahn auch mit einer dafür vorgesehenen Lichtquelle mit Licht in einem bestimmten Spektralbereich beleuchtet werden, um das von der Papierbahn in diesem Spektralbereich gestreute bzw. reflektierte Licht zu erfassen.

Bei der Eigenschaft der durch die Imprägnieranlage laufenden Papierbahn handelt es sich vorzugsweise um eine Eigenschaft, die durch die Betriebsparameter der Imprägnieranlage beeinflusst wird, insbesondere um die Beharzung, den Aushärtegrad oder die Restfeuchte der Papierbahn. Weiter bevorzugt handelt es sich bei der Eigenschaft um eine Eigenschaft der Papierbahn, nachdem diese in der Imprägnieranlage mindestens einmal mit einem Harz beaufschlagt wurde. Besonders bevorzugt handelt es sich bei der Eigenschaft um eine Eigenschaft der Papierbahn, nachdem diese die Imprägnieranlage vollständig durchlaufen hat, d.h. um eine Eigenschaft des Imprägnats. So hat sich gezeigt, dass mit der beschriebenen Vorrichtung bzw. mit dem beschriebenen Verfahren eine Eigenschaft des Imprägnats bestimmt werden kann.

Die Berechnung des Maßes der Eigenschaft kann zusätzlich abhängig von einem vorgegebenen oder vorgebbaren Wert einer Größe erfolgen, die sich auf eine Eigenschaft der Papierbahn bezieht, bevor diese die Imprägnieranlage durchläuft. Bei der Größe kann es sich beispielsweise um das Papiergewicht oder um eine Eigenschaft eines Dekors der Papierbahn handeln. Auf diese Weise können bei der Berechnung des Maßes für die Eigenschaft der durch die Imprägnieranlage laufenden Papierbahn die Eigenschaften der Papierbahn vor Eintritt in die Imprägnieranlage mitberücksichtigt werden, so dass sich das Maß für die Eigenschaft zuverlässiger und genauer bestimmen lässt.

Die Imprägnieranlage ist dazu eingerichtet, eine entlang einer Prozessstrecke durch die Imprägnieranlage laufende Papierbahn zu imprägnieren, insbesondere mit mindestens einem Harz. Hierunter wird verstanden, dass der Imprägnieranlage eine Papierbahn zuführbar ist, welche die Imprägnieranlage auf vorgegebene Weise durchläuft. Insbesondere kann die Imprägnieranlage verschiedene Stationen aufweisen, wie zum Beispiel eine oder mehrere Imprägnierstationen, eine oder mehrere Trocknungsstationen und/oder andere Verarbeitungsstationen, die von der Papierbahn in einer bestimmten Reihenfolge, nämlich entsprechend der Prozessstrecke, durchlaufen werden. Weiterhin kann die Imprägnieranlage Transportmittel aufweisen, beispielsweise Rollen oder ein Förderband, um die Papierbahn durch die Imprägnieranlage zu transportieren.

Unter dem Imprägnieren der Papierbahn wird vorliegend zumindest die Beaufschlagung mit mindestens einem Harz verstanden. Weiterhin umfasst das Imprägnieren vorzugsweise mindestens eine Trocknung der mit Harz beaufschlagten Papierbahn, um die Feuchtigkeit der Papierbahn auf einen gewünschten Wert (Restfeuchte) einzustellen. Die durch die Imprägnieranlage gelaufene Papierbahn wird als Imprägnat bezeichnet.

Die Berechnungsmittel der Imprägnieranlage können beispielsweise einen Mikroprozessor und einen damit verbundenen Speicher aufweisen, wobei der Speicher Befehle enthält, deren Ausführung durch den Mikroprozessor die Durchführung der gewünschten Berechnung veranlasst.

Weiterhin kann die Imprägnieranlage Ausgabemittel aufweisen, die dazu eingerichtet sind, eine von dem Maß für die Eigenschaft der durch die Imprägnieranlage laufenden Papierbahn abhängige Größe auszugeben. Bei den Ausgabemitteln kann es sich beispielsweise um eine Anzeige wie zum Beispiel um einen Bildschirm handeln oder auch um einen Sender, um die Größe an einen Empfänger zu übermitteln.

Im Folgenden werden verschiedene Ausführungsformen der Imprägnieranlage sowie des Verfahrens zur Überwachung einer Imprägnieranlage beschrieben, wobei die einzelnen Ausführungsformen jeweils sowohl für die Imprägnieranlage als auch in entsprechender Weise für das Verfahren anwendbar sind. Darüber hinaus sind die einzelnen Ausführungsformen untereinander kombinierbar.

Bei einer ersten Ausführungsform weist die Imprägnieranlage einen Sensor auf, der dazu eingerichtet ist, an einer zweiten, von der ersten Position verschiedenen Position der Prozessstrecke ein zweites optisches Spektralsignal von der durch die Imprägnieranlage laufenden Papierbahn zu erfassen, und sind die Berechnungsmittel dazu eingerichtet, ein Maß für eine Eigenschaft der durch die Imprägnieranlage laufenden Papierbahn abhängig von dem ersten optischen Spektralsignal und von dem zweiten optischen Spektralsignal zu berechnen.

Bei einer entsprechenden Ausführungsform des Verfahrens wird an einer zweiten, von der ersten Position verschiedenen Position in der Prozessstrecke ein zweites optisches Spektralsignal von der durch die Imprägnieranlage laufenden Papierbahn erfasst und ein Maß für eine Eigenschaft der durch die Imprägnieranlage laufenden Papierbahn abhängig von dem ersten optischen Spektralsignal und von dem zweiten optischen Spektralsignal berechnet.

Es wurde festgestellt, dass sich eine Eigenschaft der durch die Imprägnieranlage laufenden Papierbahn zuverlässig und mit weniger Kalibrieraufwand bestimmen lässt, indem bei der Berechnung des Maßes für die Eigenschaft optische Spektralsignale der Papierbahn von verschiedenen Positionen in der Prozessstrecke berücksichtigt werden. Insbesondere ermöglicht diese Vorgehensweise, Eigenschaften des Papiers und/oder des Dekors der der Imprägnieranlage zugeführten Papierbahn zu berücksichtigen, so dass der Kalibrieraufwand bei sich ändernden Eigenschaften des Papiers bzw. Dekors erheblich reduziert werden kann.

Unter einer Position in der Prozessstrecke wird vorliegend eine Position in Bezug auf die entlang der Prozessstrecke von der Papierbahn zu durchlaufenden Stationen der Imprägnieranlage verstanden. Besteht die Prozessstrecke beispielsweise aus einer Imprägnierstation und einer nachfolgenden Trocknungsstation, so sind bei dieser Prozessstrecke verschiedene Positionen denkbar, nämlich insbesondere eine erste Position vor der Imprägnierstation, eine zweite Position zwischen Imprägnier- und Trocknungsstation und eine dritte Position hinter der Trocknungsstation. Eine Position kann auch innerhalb einer Station angeordnet sein, beispielsweise in einem Trocknungskanal einer Trocknungsstation. Allgemein wird unter zwei voneinander verschiedenen Positionen verstanden, dass die Positionen sich in Bezug auf die entlang der Prozessstrecke von der Papierbahn zu durchlaufenden Stationen der Imprägnieranlage unterscheiden, d.h. dass die Papierbahn zwischen zwei verschiedenen Positionen zumindest eine Station der Imprägnieranlage zumindest teilweise durchläuft. Vorzugsweise sind zwei verschiedene Positionen vor, nach bzw. zwischen verschiedenen Stationen der Imprägnieranlage angeordnet.

Bei einer weiteren Ausführungsform weist die Imprägnieranlage mindestens eine Trocknungsstation auf, die dazu eingerichtet ist, die mit Harz beaufschlagte Papierbahn zu trocknen, und die erste Position ist in der Prozessstrecke hinter der letzten Trocknungsstation angeordnet. Unter der letzten Trocknungsstation wird die Trocknungsstation verstanden, die von einer entlang der Prozessstrecke laufenden Papierbahn zuletzt durchlaufen wird.

Durch die Anordnung der ersten Position hinter der letzten Trocknungsstation enthält das erste optische Spektralsignal Informationen über die Papierbahn nach der letzten Trocknung und damit unmittelbar Informationen über die Eigenschaften des Imprägnats, wie zum Beispiel über dessen Restfeuchte. Dadurch ist das erste optische Spektralsignal besonders geeignet, um ein Maß für eine Eigenschaft der Papierbahn nach Durchlaufen der Imprägnieranlage zu berechnen.

Bei der Trocknungsstation kann es sich beispielsweise um einen Durchlaufofen handeln, durch den die Papierbahn hindurchgeführt wird. In der Prozessstrecke ist eine solche Trocknungsstation insbesondere nach einer Imprägnierstation angeordnet.

Bei einer weiteren Ausführungsform weist die Imprägnieranlage mindestens eine Imprägnierstation auf, die dazu eingerichtet ist, die durch die Imprägnieranlage laufende Papierbahn mit einem Harz zu beaufschlagen, und die zweite Position in der Prozessstrecke ist vor der ersten Imprägnierstation angeordnet. Auf diese Weise kann an der zweiten Position ein optisches Spektralsignal der Papierbahn vor dem Durchlaufen der ersten Imprägnierstation, das heißt vor der ersten Imprägnierung der Papierbahn, erfasst werden. Das zweite Spektralsignal beinhaltet damit Informationen über die Eigenschaften des Papiers bzw. Dekors vor Beginn der Imprägnierung. Mit diesen Informationen können also Eigenschaften des Rohpapiers bzw. Eigenschaften des Dekors bei der Berechnung des Maßes für die Eigenschaft der durch die Imprägnieranlage laufenden Papierbahn berücksichtigt werden. Hierdurch lässt sich der Kalibrieraufwand für die Berechnung reduzieren.

Bei der Imprägnierstation kann es sich beispielsweise um ein Tauchbad handeln. Beim Imprägnierprozess wird die Papierbahn dann in das mit einer Harzmischung gefüllte Tauchbad getaucht und auf diese Weise imprägniert.

Zusätzlich oder alternativ können auch Imprägnierwalzen vorgesehen sein, mit denen ein Harz auf die Papierbahn aufgebracht werden kann bzw. die Harzmenge reguliert werden kann.

Bei einer weiteren Ausführungsform weist die Imprägnieranlage eine erste Imprägnierstation auf, die dazu eingerichtet ist, die Papierbahn mit einem ersten Harz zu beaufschlagen, und eine zweite, in der Prozessstrecke hinter der ersten Imprägnierstation angeordnete Imprägnierstation, die dazu eingerichtet ist, die Papierbahn mit einem zweiten Harz zu beaufschlagen. Mit der ersten Imprägnierstation kann insbesondere eine Grundimprägnierung der Papierbahn erfolgen, bei der das Papier mit Harz gefüllt wird. Mit der zweiten Imprägnierstation kann insbesondere eine Oberfächenimprägnierung der Papierbahn erfolgen, bei der eine zusätzliche Harzschicht auf die grundimprägnierte Papierbahn aufgebracht wird. Für die erste und zweite Imprägnierstation können identische oder verschiedene Harzmischungen verwendet werden. Typischerweise wird für die erste Imprägnierstation eine im Wesentlichen Harnstoffharz und gegebenenfalls etwas Melaminharz aufweisende Harzmischung verwendet, während für die zweite Imprägnierstation typischerweise eine im Wesentlichen nur Melaminharz aufweisende Harzmischung verwendet wird.

Bei einer weiteren Ausführungsform weist die Imprägnieranlage eine erste Trocknungsstation auf, die in der Prozessstrecke zwischen einer ersten und einer zweiten Imprägnierstation angeordnet ist, und eine zweite Trocknungsstation, die in der Prozessstrecke hinter der zweiten Imprägnierstation angeordnet ist. Auf diese Weise kann eine mittels zweier Imprägnierstationen imprägnierte Papierbahn nach jeder der zwei Imprägnierungen getrocknet werden. Mit der ersten Trocknungsstation kann insbesondere die Feuchte der Papierbahn für die Imprägnierung in der zweiten Imprägnierstation eingestellt werden. Mit der zweiten Trocknungsstation kann insbesondere die Restfeuchte der fertig imprägnierten Papierbahn eingestellt werden.

Bei einer weiteren Ausführungsform handelt es sich bei der Eigenschaft der durch die Imprägnieranlage laufenden Papierbahn um die Restfeuchte, die Beharzung oder den Aushärtegrad der Papierbahn. Es hat sich herausgestellt, dass sich durch die Kombination des ersten und zweiten optischen Spektralsignals insbesondere diese Eigenschaften der Papierbahn zuverlässig und bei geringerem Kalibrieraufwand bestimmen lassen. Gleichzeitig handelt es sich bei diesen Eigenschaften um wichtige Parameter, die während des Imprägnierungsprozesses in bestimmten Sollbereichen gehalten werden müssen, um eine gewünschte Qualität der imprägnierten Papierbahn erreichen zu können. Daher ist die Online-Überwachung dieser Eigenschaften besonders vorteilhaft.

Die Restfeuchte ist durch folgende Formel definiert:

$$\text{Restfeuchte [in \%]} = \frac{\text{Tränkgewicht} - \text{Trockengewicht}}{\text{Tränkgewicht}} \cdot 100$$

Typischerweise liegt die Restfeuchte von imprägnierten Papierbahnen im Bereich von 5,5 und 6 %.

Die Beharzung ist durch folgende Formel definiert:

$$\text{Beharzung [in \%]} = \frac{\text{Trockengewicht} - \text{Papiergewicht}}{\text{Papiergewicht}} \cdot 100$$

Typischerweise liegt die Beharzung von imprägnierten Papierbahnen im Bereich von 70 - 130 %.

Unter dem Tränkgewicht (Einheit: g/m$^2$) wird das Flächengewicht des fertig produzierten Imprägnats (d.h. nach Durchlaufen der Imprägnieranlage) verstanden, das mittels einer Waage im Labor ermittelt wird.

Unter dem Trockengewicht (Einheit: g/m$^2$) wird das Flächengewicht des fertig produzierten Imprägnats (d.h. nach Durchlaufen der Imprägnieranlage) verstanden, das nach vollständiger Trocknung in einem Trocknungsschrank (3 min. bei 180 °C) mit einer Waage im Labor ermittelt wird.

Unter dem Papiergewicht (Einheit: g/m$^2$) wird das Flächengewicht der Papierbahn (insb. der Dekorpapierbahn) vor der Imprägnierung verstanden, das mit einer Waage im Labor ermittelt wird.

Der Aushärtegrad des Imprägnats lässt sich indirekt als Funktion der Restfeuchte bestimmen.

Bei einer weiteren Ausführungsform ist das erste und das zweite optische Spektralsignal jeweils ein Infrarotspektralsignal, insbesondere ein Nahinfrarotspektralsignal. Ein solches Infrarot- bzw. Nahinfrarotspektralsignal wird vom entsprechenden Sensor vorzugsweise als Infrarotspektrum, insbesondere Nahinfrarotspektrum erfasst. Es hat sich herausgestellt, dass die Eigenschaften der Papierbahn, insbesondere die Restfeuchte oder die Beharzung der Papierbahn, besonders durch ein optisches Spektralsignal im Infrarotbereich, insbesondere im Nahinfrarotbereich mit Wellenzahlen im Bereich von 4000 bis 8000 cm$^{-1}$ bestimmt werden können. Unter der Wellenzahl wird der Kehrwert der Wellenlänge verstanden.

Die Berechnungsmittel sind vorzugsweise dazu eingerichtet, das erste und das zweite optische Spektralsignal, insbesondere das erste oder zweite Infrarotsignal bzw. Nahinfrarotsignal, mit Methoden aus der Chemometrie auszuwerten, insbesondere unter Verwendung statistischer Methoden wie der multiplen-linearen Regression, der Clusteranalyse oder der Hauptkomponentenanalyse. Die Chemometrie ist eine allgemein bekannte Methodik bei der Auswertung von Spektren, insbesondere von Nahinfrarotspektren, und bedarf daher an dieser Position keiner näheren Erläuterung. Eine Beschreibung chemometrischer Methoden wie der Hauptkomponentenanalyse findet sich beispielsweise in dem Fachbuch "Prozessanalytik: Strategien und Fallbeispiele aus der industriellen Praxis" von Rudolf W. Kessler (Hrsg.), Auflage von 2006, ISBN-13 978-3-527-31196-5 (vgl. z.B. Kapitel 4.6 des Buches) oder auch in der EP 0 807 809 A2.

Vorzugsweise sind die Berechnungsmittel dazu eingerichtet, das erste und das zweite optische Spektralsignal, insbesondere das erste oder zweite Infrarotsignal bzw. Nahinfrarotsignal, mit einer Hauptkomponentenanalyse der Chemometrie auszuwerten. Diese Methode hat sich als besonders geeignet herausgestellt, um aus den optischen Spektralsignalen Informationen über die durch die Imprägnieranlage laufende Papierbahn zu bestimmen.

Bei einer weiteren Ausführungsform wird das Maß für die Eigenschaft der durch die Imprägnieranlage laufenden Papierbahn abhängig von einer Differenz von mindestens einem von dem ersten Spektralsignal abhängigen ersten Wert und mindestens einem von dem zweiten Spektralsignal abhängigen zweiten Wert berechnet. Es hat sich herausgestellt, dass sich die Spektralsignal-Informationen, die sich auf die zu berechnende Eigenschaft der Papierbahn beziehen, auch durch eine solche Differenzbildung aus den an der ersten und zweiten Position ermittelten Spektralsignalen extrahieren lassen. Insbesondere lassen sich auf diese Weise Veränderungen der Eigenschaften des Rohpapiers bzw. des Dekors herausrechnen, so dass der Kalibrieraufwand reduziert wird.

Bei einer weiteren Ausführungsform sind die Berechnungsmittel dazu eingerichtet, abhängig von dem zweiten optischen Spektralsignal Kalibrierdaten aus einer Menge gespeicherter Kalibrierdaten auszuwählen und ein Maß für eine Eigenschaft der durch die Imprägnieranlage laufenden Papierbahn abhängig von dem ersten optischen Spektralsignal und von den ausgewählten Kalibrierdaten zu berechnen. Durch die Kalibrierdaten können bei der Auswertung des zweiten optischen Spektralsignals Eigenschaften des Rohpapiers oder des Dekors berücksichtigt werden. Insbesondere können diese Eigenschaften einen starken Einfluss auf das Infrarotspektrum der Papierbahn haben, der sich durch die Kalibrierdaten berücksichtigen lässt, so dass eine bessere Auswertung des ersten optischen Spektralsignals und damit eine zuverlässigere Berechnung des Maßes für die Eigenschaft der durch die Imprägnieranlage laufenden Papierbahn erreicht werden kann. Die Auswahl der Kalibrierdaten erfolgt abhängig von dem zweiten optischen Spektralsignal, das vorzugsweise vor der ersten Imprägnierstation erfasst wird.

Die Kalibrierdaten können beispielsweise in einem mit den Berechnungsmitteln verbundenen Speicher gespeichert sein. Beispielsweise kann der Speicher verschiedene Kalibrierdaten für verschiedene Papier- oder Dekorarten enthalten.

Zusätzlich oder alternativ können Kalibrierdaten auch fest vorgegeben sein, beispielsweise wenn mit der Imprägnieranlage Papierbahnen ähnlicher Beschaffenheit oder mit ähnlichen oder gleichen Dekoren imprägniert werden. Weiterhin können Kalibrierdaten zusätzlich oder alternativ auch vom Bediener der Anlage vorgegeben werden, beispielsweise das Papiergewicht (Flächengewicht in g/m$^2$) des Rohpapiers der Papierbahn. Die Angabe des Papiergewichts ist beispielsweise zur Berechnung der Beharzung in Prozent erforderlich.

Bei einer weiteren Ausführungsform sind die Berechnungsmittel dazu eingerichtet, die Papierbahn abhängig von dem zweiten optischen Spektralsignal einer von einer Mehrzahl von Klassen zuzuordnen und die Kalibrierdaten abhängig von der zugeordneten Klasse auszuwählen. Es wurde festgestellt, dass es mit der beschriebenen Imprägnieranlage bzw. dem beschriebenen Verfahren nicht mehr notwendig ist, für jede Papierbahn, insbesondere für jede Papierart bzw. für jedes einzelne Dekor, gesonderte Kalibrierdaten vorhalten zu müssen.

Vielmehr können Papierbahnen mit verschiedenen Papierarten und/oder Dekoren zu Klassen zusammengefasst werden, wobei jeder Klasse jeweilige Kalibrierdaten zugeordnet sind, die für alle Papierbahnen dieser Klasse verwendet werden können. Die Zuordnung der Papierbahn zu einer Klasse erfolgt vorzugsweise auf Grundlage einer vorgegebenen oder vorgebbaren Zuordnungsvorschrift auf Basis einer über das zweite optische Spektralsignal bestimmten Eigenschaft der Papierbahn. Zu einer bestimmten Klasse gehören in diesem Fall also jeweils Papierbahnen, die hinsichtlich dieser Eigenschaft ähnlich sind, beispielsweise in einem bestimmten Parameterbereich liegen. Die Bestimmung der Eigenschaft der Papierbahn aus dem betreffenden, insbesondere zweiten optischen Spektralsignal erfolgt vorzugsweise mittels chemometrischer Methoden. Beispielsweise kann die Zuordnungsvorschrift dergestalt sein, dass Papierbahnen mit hellen Dekoren einer ersten Klasse mit zugeordneten ersten Kalibrierdaten und Paneele mit dunklen Dekoren einer zweiten Klasse mit zweiten Kalibrierdaten zugeordnet werden. Auf diese Weise lassen sich hunderte bis tausende Dekore einer geringen Zahl von Klassen zuordnen, so dass sich der Kalibrieraufwand erheblich reduzieren lässt.

Bei einer Ausführungsform umfasst das Verfahren zur Überwachung einer Imprägnieranlage insbesondere folgende Schritte bzw. ist die Imprägnieranlage zur Durchführung folgender Schritte eingerichtet:

1. Erfassen eines Nahinfrarotspektrums der Papierbahn an einer Position, insbesondere an der zweiten Position, in der Prozessstrecke vor der ersten Imprägnierstation;
2. Auswertung des Nahinfrarotspektrums aus Schritt 1 mittels chemometrischer Methoden, insbesondere einer Hauptkomponentenanalye, und Zuordnung der Papierbahn zu einer Klasse aus einer Mehrzahl von Klassen;

3. Erfassen jeweils eines Nahinfrarotspektrums der Papierbahn an mindestens einer weiteren Position, insbesondere an der ersten Position, in der Prozessstrecke;

4. Auswertung des mindestens einen Nahinfrarotspektrums aus Schritt 3 mittels chemometrischer Methoden;

5. Berechnung eines Maßes für eine Eigenschaft der durch die Imprägnieranlage laufenden Papierbahn, z.B. die Restfeuchte oder die Beharzung, abhängig von dem Ergebnis der Auswertung aus Schritt 4 und von Kalibrierdaten, die der in Schritt 2 zugeordneten Klasse zugeordnet sind.

Bei einer entsprechenden Ausführungsform der Imprägnieranlage ist diese, insbesondere die Berechnungsmittel, dazu eingerichtet, die zuvor beschriebenen Schritte durchzuführen und/oder zu steuern.

Bei einer weiteren Ausführungsform weist die Imprägnieranlage eine erste Imprägnierstation auf, die dazu eingerichtet ist, die Papierbahn mit einem ersten Harz zu beaufschlagen, eine zweite, in der Prozessstrecke hinter der ersten Imprägnierstation angeordneten Imprägnierstation, die dazu eingerichtet ist, die Papierbahn mit einem zweiten Harz zu beaufschlagen, und einen Sensor, der dazu eingerichtet ist, an einer dritten Position in der Prozessstrecke ein drittes optisches Spektralsignal von der durch die Imprägnieranlage laufenden Papierbahn zu erfassen, wobei die dritte Position zwischen der ersten und der zweiten Imprägnierstation angeordnet ist, vorzugsweise hinter einer der ersten Imprägnierstation in der Prozessstrecke nachfolgenden Trocknungsstation, und wobei die Berechnungsmittel dazu eingerichtet sind, ein Maß für eine Eigenschaft der durch die Imprägnieranlage laufenden Papierbahn abhängig von dem zweiten und von dem dritten optischen Spektralsignal zu berechnen. Insbesondere kann mit dem dritten optischen Spektralsignal ein Maß für die Restfeuchte und/oder die Beharzung nach der ersten Trochnungsstation ermittelt und auf diese Weise online überwacht werden.

Bei einer weiteren Ausführungsform weist die Imprägnieranlage eine erste Imprägnierstation auf, die dazu eingerichtet ist, die Papierbahn mit einem ersten Harz zu beaufschlagen, eine zweite, in der Prozessstrecke hinter der ersten Imprägnierstation angeordnete Imprägnierstation, die dazu eingerichtet ist, die Papierbahn mit einem zweiten Harz zu beaufschlagen, und einen Sensor, der dazu eingerichtet ist, an einer vierten Position in der Prozessstrecke ein viertes optisches Spektralsignal von der durch die Imprägnieranlage laufenden Papierbahn zu erfassen, wobei die vierte Position zwischen der zweiten Imprägnierstation und einer der zweiten Imprägnierstation in der Prozessstrecke nachfolgenden Trocknungsstation angeordnet ist, und wobei die Berechnungsmittel dazu eingerichtet sind, ein Maß für eine Eigenschaft der durch die Imprägnieranlage laufenden Papierbahn abhängig von dem zweiten und von dem vierten optischen Spektralsignal zu berechnen.

Bei einer weiteren Ausführungsform umfasst mindestens ein Sensor der Imprägnieranlage ein Spektrometer. Beispielsweise kann der Sensor einen Messkopf umfassen, der zum Beispiel über einen Lichtwellenleiter an ein Spektrometer angeschlossen ist. Unter einem Spektrometer wird ein Messgerät verstanden, mit dem ein optisches Spektralsignal wellenlängenaufgelöst ausgewertet werden kann. Auf diese Weise können wellenlängenspezifische Informationen aus dem optischen Spektralsignal extrahiert werden, beispielsweise Wellenlängenbereiche, die für die Beharzung oder die Restfeuchte charakteristisch sind. Vorzugsweise umfassen der Sensor oder die Sensoren für die erste und zweite Position, weiter bevorzugt auch der Sensor oder die Sensoren für die dritte und vierte Position ein Spektrometer.

Bei einer weiteren Ausführungsform teilen sich mindestens zwei Sensoren der Imprägnieranlage ein optisches Spektrometer. Auf diese Weise können die von den mindestens zwei Sensoren erfassten Spektralsignale mit nur einem Spektrometer für die Berechnung vermessen werden. Es ist damit nicht erforderlich, für jeden Sensor ein eigenes Spektrometer vorzuhalten, so dass Kosten für die verhältnismäßig teuren Spektrometer eingespart werden können.

Die mindestens zwei Sensoren können beispielsweise jeweils einen Messkopf umfassen, der mittels eines jeweiligen Lichtwellenleiters an dem Spektrometer angeschlossen ist. Vorzugsweise unterscheiden sich die Längen der jeweiligen Lichtwellenleiter voneinander um maximal 10 m und sind besonders bevorzugt gleichlang. Durch die Verwendung im Wesentlichen gleichlanger Lichtwellenleiter werden die optischen Spektralsignale in den Lichtwellenleitern im Wesentlichen gleichstark gedämpft. Auf diese Weise können systematische Fehler aufgrund einer wellenlängenabhängigen Dämpfung innerhalb der Lichtwellenleiter vermieden werden. Um eine Dämpfung in den Lichtwellenleitern möglichst gering zu halten, sind die Längen der einzelnen Lichtwellenleiter vorzugsweise so kurz wie möglich.

Die Sensorköpfe der mindestens zwei Sensoren können insbesondere über einen Multiplexer an dem Spektrometer angeschlossen werden. Unter einem Multiplexer wird vorliegend ein optisches Gerät mit mindestens einem ersten und einem zweiten Eingang und einem Ausgang verstanden, mit dem wahlweise Spektralsignale von dem ersten oder dem zweiten Eingang zum Ausgang geleitet werden können. Bei Verwendung eines Multiplexers werden die Sensorköpfe an die Eingänge und das Spektrometer an den Ausgang des Multiplexers angeschlossen.

Bei einer weiteren Ausführungsform weist die Imprägnieranlage eine Steuerung auf, die dazu eingerichtet ist, das beschriebene Verfahren oder eine der beschriebenen Ausführungsformen des Verfahrens durchzuführen. Die Steuerung kann insbesondere einen Mikroprozessor mit einem damit verbundenen Speicher umfassen, wobei der Speicher Befehle enthält, deren Ausführung durch den Mikroprozessor die Durchführung des Verfahrens veranlasst.

Bei einer weiteren Ausführungsform weist die Imprägnieranlage Steuermittel auf, die dazu eingerichtet sind, die Imprägnieranlage abhängig von dem Maß für eine Eigenschaft der durch die Imprägnieranlage laufenden Papierbahn zu steuern. Bei einer entsprechenden Ausführungsform des Verfahrens wird die Imprägnieranlage abhängig von dem Maß für die Eigenschaft der durch die Imprägnieranlage laufenden Papierbahn gesteuert. Auf diese Weise kann die Imprägnieranlage mit dem berechneten Maß der Eigenschaft geregelt werden, so dass eine automatische Korrektur der Betriebsparameter der Anlage möglich ist, wenn die jeweilige Eigenschaften der Papierbahn, beispielweise die Beharzung oder die Restfeuchte, von einem vorgegebenen oder vorgebbaren Sollwert abweicht.

Die Regelung der Imprägnieranlage umfasst vorzugsweise mindestens einen oder mehrere der folgenden Regelkreise:

- Regelung der Beharzung der ersten Imprägnierstation abhängig von einem Maß für die Beharzung, wobei das Maß für die Beharzung bestimmt wird abhängig von einem optischen Spektralsignal, das an einer Position hinter der der ersten Imprägnierstation nachfolgenden Trocknungsstation erfasst wird, und/oder von einem optischen Spektralsignal, das an einer Position hinter der letzten Trocknungsstation erfasst wird. Erfolgt der Harzauftrag an der ersten Imprägnierstation mittels Harz-Auftragswalzen, so kann die Regelung insbesondere über die Einstellung eines an den Auftragswalzen vorgesehenen Dosierspalts erfolgen.

- Regelung der Feuchte der Papierbahn vor Eintritt in die zweite Imprägnierstation abhängig von einem Maß für die Restfeuchte, das bestimmt wird abhängig von einem optischen Spektralsignal, das an einer Position hinter der der ersten Imprägnierstation nachfolgenden Trocknungsstation erfasst wird. Die Regelung kann insbesondere über die Einstellung des der ersten Trocknungsstation erfolgen, beispielsweise durch Einstellung der Temperatur oder die Transportgeschwindigkeit der Papierbahn.

- Regelung der Restfeuchte der Papierbahn, nachdem diese durch die Imprägnieranlage gelaufen ist (d.h. der Restfeuchte des Imprägnats) abhängig von einem Maß für die Restfeuchte, das bestimmt wird abhängig von einem optischen Spektralsignal, das an einer Position hinter der letzten Trocknungsstation erfasst wird. Die Regelung kann insbesondere über die Einstellung der ersten und/oder zweiten Trocknungsstation erfolgen, beispielsweise durch Einstellung der jeweiligen Temperatur oder die Transportgeschwindigkeit der Papierbahn.

Bei einer weiteren Ausführungsform können anstelle eines Sensors an einer Position in der Prozessstrecke auch mehrere Sensoren vorgesehen sein, die dazu eingerichtet sind, optische Spektralsignale von der Papierbahn an mehreren Stellen in Bezug auf deren Quererstreckung, d.h. über die Breite der Papierbahn zu erfassen. Alternativ kann ein Sensor auch als traversierender Sensor ausgebildet sein, der dazu eingerichtet ist, über die Breite der Papierbahn verfahren zu werden. Auf diese Weise kann das Maß für die Eigenschaft der durch die Imprägnieranlage laufenden Papierbahn für mehrere Stellen der Papierbahn in Bezug auf deren Quererstreckung berechnet werden. Dadurch lässt sich die Qualität der Papierbahn auch über die Breite überwachen und ggf. regeln. Diese Ausführungsform ist insbesondere für den Sensor geeignet, der zur Erfassung eines optischen Spektralsignals an der ersten Position eingerichtet ist, insbesondere wenn diese hinter der letzten Trocknungsstation angeordnet ist.

Weitere Merkmale und Vorteile der vorliegenden Erfindung ergeben sich aus der nachfolgenden Beschreibung von Ausführungsbeispielen, wobei auf die beigefügte Zeichnung Bezug genommen wird.

In der Zeichnung zeigen

Fig. 1    ein Ausführungsbeispiel der erfindungsgemäßen Imprägnieranlage und des Verfahrens zu deren Überwachung in schematischer Darstellung,

Fig. 2    ein Diagramm mit von einem Sensor der Imprägnieranlage aus Fig. 1 erfassten Nahinfrarotspektren zur Berechnung der Restfeuchte einer durch die Imprägnieranlage laufenden Papierbahn und

Fig. 3a-b    Diagramme mit Daten von Nahinfrarotspektren von Papierbahnen zur Bestimmung einer Zuordnungsvorschrift, um eine Papierbahn abhängig von einem ersten erfassten optischen Spektralsignal einer Klasse zuzuordnen.

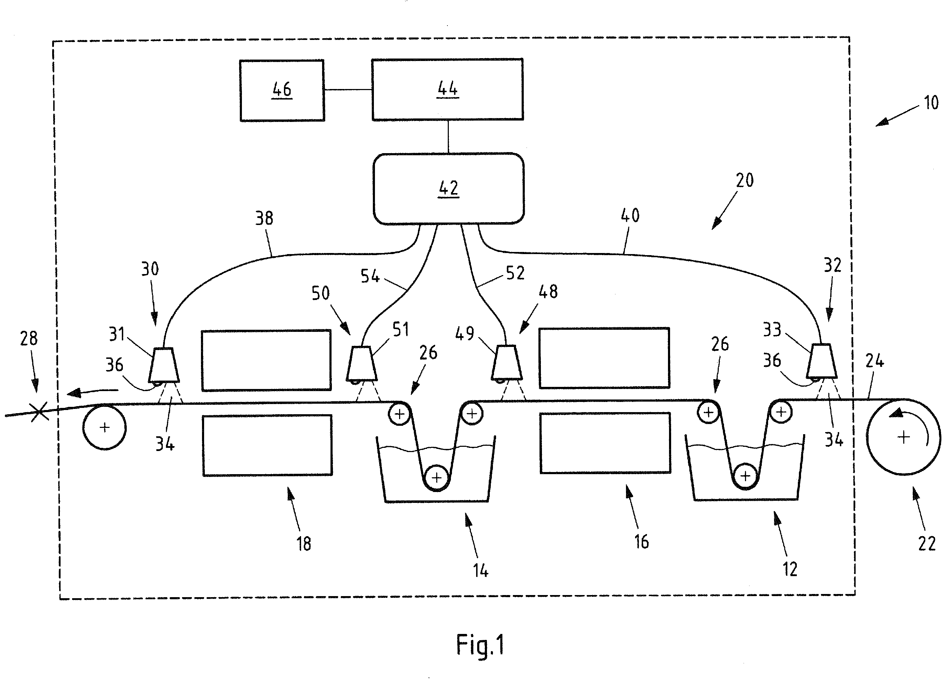

Fig. 1 zeigt ein Ausführungsbeispiel der Imprägnieranlage und des Verfahrens zu deren Steuerung in schematischer Darstellung.

Die Imprägnieranlage 10 umfasst eine erste Imprägnierstation 12 in Form eines ersten Tauchbads mit einer ersten Harzmischung, eine zweite Imprägnierstation 14 in Form eines zweiten Tauchbads mit einer zweiten Harzmischung, eine erste Trocknungsstation 16 in Form eines ersten Durchlaufofens und eine zweite Trocknungsstation 18 in Form eines zweiten Durchlaufofens. Diese Stationen bilden zusammen eine Prozessstrecke 20, in der nacheinander zunächst die erste Imprägnierstation 12, dann die erste Trocknungsstation 16, dann die zweite Imprägnierstation 14 und schließlich die zweite Trocknungsstation 18 angeordnet sind.

Eine von einer Papierrolle 22 abgerollte Papierbahn, beispielsweise eine Dekorpapierbahn 24 mit einem auf das Papier aufgebrachten Dekor, wird im Betrieb entlang der Prozessstrecke 20 mittels dafür vorgesehener Führungs- und Transportrollen 26 durch die Imprägnieranlage 10 geleitet.

Hierbei wird die Papierbahn zunächst in der ersten Imprägnierstation 12 durch Eintauchen in das erste Tauchbad mit einem ersten Harz beaufschlagt und so mit einer Grundimprägnierung versehen. Anschließend wird die Papierbahn in der ersten Trocknungsstation 16 beim Durchlaufen des ersten Durchlaufofens getrocknet. Sodann wird die Papierbahn 24 in der zweiten Imprägnierstation 14 durch Eintauchen in das zweite Tauchbad mit einem zweiten Harz beaufschlagt und so mit einer Zusatzimprägnierung versehen, bevor sie dann in der zweiten Trocknungsstation 18 beim Durchlaufen des zweiten Durchlaufofens auf die gewünschte Restfeuchte getrocknet wird.

Um die gewünschten Eigenschaften der imprägnierten Papierbahn 24 am Ende der Imprägnieranlage 10 zu erhalten, wurden im Stand der Technik an der mit dem Pfeil 28 bezeichneten Position Probenschnitte aus der Papierbahn herausgeschnitten und im Labor analysiert.

Die Imprägnieranlage 10 erlaubt demgegenüber eine Online-Überwachung von Eigenschaften der durch die Imprägnieranlage 10 laufenden Papierbahn 24. Zu diesem Zweck weist die Imprägnieranlage 10 einen ersten Sensor 30 auf, der dazu eingerichtet ist, an einer ersten Position, nämlich hinter der letzten Trocknungsstation 18, ein optisches Spektralsignal von der Papierbahn 24 zu erfassen. Vorzugsweise weist die Imprägnieranlage 10 zudem einen zweiten Sensor 32 auf, der dazu eingerichtet ist, an einer zweiten Position, nämlich vor der ersten Imprägnierstation 12, ein zweites optisches Spektralsignal der Papierbahn 24 zu erfassen.

Der erste optische Sensor 30 weist einen Messkopf 31 auf. Der Messkopf 31 umfasst eine Lichtquelle 34, die dazu eingerichtet ist, die Papierbahn 24 mit Infrarotlicht zu beaufschlagen, sowie einen optischen Kopf 36, in den das von der Papierbahn gestreute bzw. reflektierte Infrarotlicht fällt und über einen an dem Messkopf 30 angeschlossenen Lichtwellenleiter 38 und einen Multiplexer 42 zu einem Spektrometer 44 geleitet wird. Der zweite optische Sensor 32 weist einen entsprechenden Messkopf 33 auf, der über einen Lichtwellenleiter 40 und den Multiplexer 42 an dem Spektrometer 44 angeschlossen ist. Die Sensoren 30 und 32 teilen sich also das Spektrometer 44.

Der Multiplexer 42 kann zwischen den Lichtwellenleitern 38, 40 hin und her schalten und jeweils das entsprechende Spektralsignal an das Spektrometer 44 übermitteln. Beispielsweise kann der Multiplexer das jeweilige Spektralsignal von den Messköpfen 31, 33 abwechselnd für jeweils fünf Sekunden an das Spektrometer 44 senden. An das Spektrometer 44 sind Berechnungsmittel 46 in Form einer Rechnereinheit angeschlossen, an die das Spektrometer 44 im Betrieb von dem ersten und zweiten optischen Spektralsignal abhängige Daten übermittelt.

Die Berechnungsmittel 46 sind dazu eingerichtet, ein Maß für eine Eigenschaft der durch die Imprägnieranlage 10 laufenden Papierbahn 24, insbesondere die Restfeuchte, die Beharzung oder den Aushärtegrad der Papierbahn 24, zu berechnen, und zwar abhängig von dem ersten optischen Spektralsignal vom ersten Sensor 30 und vorzugsweise auch von dem zweiten optischen Spektralsignal vom zweiten Sensor 32. Zusätzlich können in einem Speicher der Berechnungsmittel 46 Kalibrierdaten gespeichert sein, die ebenfalls für die Berechnung des Maßes der Eigenschaft verwendet werden.

Die Imprägnieranlage 10 kann zusätzlich einen dritten Sensor 48 aufweisen, der dazu eingerichtet ist, an einer dritten Position in der Prozessstrecke ein drittes optisches Spektralsignal der Papierbahn 24 zu erfassen, und zwar zwischen der ersten und zweiten Imprägnierstation 12, 14, vorliegend zwischen der ersten Trocknungsstation 16 und der zweiten Imprägnierstation 14.

Weiterhin kann die Imprägnieranlage 10 auch noch einen vierten Sensor 50 aufweisen, der dazu eingerichtet ist, an einer vierten Position in der Prozessstrecke 20 ein viertes optisches Spektralsignal von der Papierbahn 24 zu erfassen, und zwar zwischen der zweiten Imprägnierstation 14 und der nachfolgenden Trocknungsstation 18.

Der dritte und der vierte Sensor 48, 50 weisen ebenfalls jeweilige Messköpfe 49, 51 auf, die über jeweilige Lichtwellenleiter 52, 54 an den Multiplexer 42 und über diesen an das Spektrometer 44 angeschlossen sind. Der Multiplexer 42 kann in diesem Fall beispielsweise dazu eingerichtet sein, die Spektralsignale der Messköpfe des ersten bis vierten Sensors abwechselnd für jeweils fünf Sekunden an das Spektrometer 44 zu übertragen.

Die Lichtwellenleiter 38, 40, 52, 54 sind vorzugsweise im Wesentlichen gleich lang, so dass die einzelnen Spektralsignale einer vergleichbaren Dämpfung in den Lichtwellenleitern unterliegen und so systematische Fehler aufgrund wellenlängenabhängiger Dämpfung reduziert werden können.

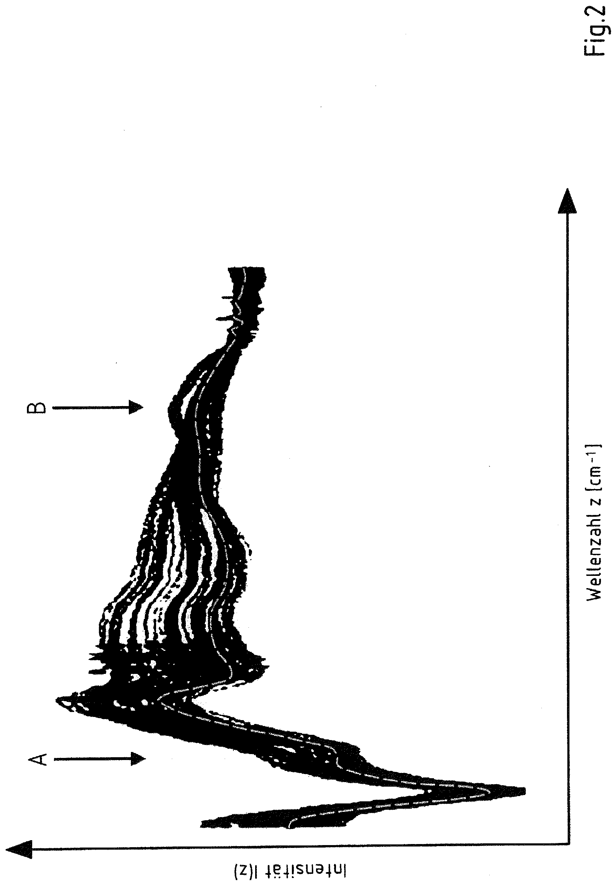

Fig. 2 zeigt ein Diagramm mit von einem Sensor der Imprägnieranlage aus Fig. 1 erfassten Nahinfrarotspektren zur Berechnung der Restfeuchte eines Imprägnats, d.h. einer durch die Imprägnieranlage hindurch gelaufenen Papierbahn. Die Nahinfrarotspektren wurden von dem ersten Sensor 30 hinter der letzten Trocknungsstation 18 erfasst. In dem Diagramm sind die Intensitäten $I(z)$ der Nahinfrarotspektren verschiedener Papierbahnen mit verschiedenen Dekoren gegen die Wellenzahl $z$, d.h. dem Kehrwert der Wellenlänge, aufgetragen. Wie der Figur 2 zu entnehmen ist, zeigen die einzelnen Nahinfrarotspektren der verschiedenen Papierbahnen einen ähnlichen, jedoch nicht identischen Verlauf.

Zur Bestimmung der Restfeuchte einer Papierbahn aus dem von dieser Papierbahn ermittelten Nahinfrarotspektrum werden beispielsweise zunächst die Intensität $I_A$ bei einer Wellenzahl im Bereich 5000 bis 5500 $cm^{-1}$, insbe-

sondere 5100 bis 5200 cm$^{-1}$ (Pfeil A in Fig. 2) und die Intensität I$_B$ bei einer Wellenzahl im Bereich 6500 bis 7200 cm$^{-1}$, insbesondere 6800 bis 7000 cm$^{-1}$ (Pfeil B in Fig. 2) bestimmt. Bei diesen Wellenzahlen ist das Nahinfrarotspektrum sensitiv auf das in der Papierbahn enthaltene Wasser. Aus den Intensitäten I$_A$ und I$_B$ bei diesen Wellenzahlen sowie vorgegebenen oder vorgebbaren Kalibrierdaten lässt sich sodann die Restfeuchte R berechnen, beispielsweise mittels eine Funktion der Art R = f(I$_A$, I$_B$; K), wobei die Kalibrierdaten K Parameter der Funktion f bestimmten. Mit den Kalibrierdaten lassen sich insbesondere Eigenschaften des Papiers oder des Dekors der Papierbahn berücksichtigen, die Einfluss auf das Nahinfrarotspektrum haben.

Die über den dritten und/oder vierten Sensor 48, 50 ermittelten Nahinfrarotspektren können in entsprechender Weise ausgewertet werden, wie es zuvor für die über den ersten Sensor 30 ermittelten Nahinfrarotspektren beschrieben wurde. Auf diese Weise lassen sich beispielsweise die Restfeuchte der Papierbahn 24 nach Durchlaufen der ersten Trocknungsstation 16 oder die Beharzung nach Durchlaufen der zweiten Imprägnierstation 14 berechnen.

Es hat sich herausgestellt, dass das Papier und/oder das Dekor der Papierbahn einen recht großen Einfluss auf das Nahinfrarotspektrum haben, so dass für verschiedene Dekore und Papierarten verschiedene Kalibrierdaten erforderlich sind. Daher werden die Kalibrierdaten vorzugsweise abhängig von dem vom zweiten Sensor 32 ermittelten Nahinfrarotspektrum ausgewählt. Es hat sich gezeigt, dass sich Eigenschaften des Papiers und/oder des Dekors der noch unimprägnierten Papierbahn mit dem Nahinfrarotspektrum vom zweiten Sensor 32 bestimmen lassen, so dass automatisch eine Auswahl geeigneter Kalibrierdaten abhängig von den Eigenschaften der Papierbahn erfolgen kann.

Sollen auf einer Imprägnieranlage verschiedenartige Papierbahnen aus unterschiedlichen Papierarten und/oder mit unterschiedlichen Dekoren imprägniert werden, so können für die verschiedenen Papierarten und Dekore jeweils eigene Kalibrierdaten vorgesehen sein.

Zur Reduzierung der Menge an Kalibrierdaten, insbesondere bei Imprägnieranlagen, mit denen hunderte oder sogar tausende verschiedenartige Papierbahnen imprägniert werden sollen, können die Papierbahnen verschiedenen Klassen zugeordnet werden, wobei jeder Klasse jeweilige Kalibrierdaten zugeordnet sind, die für jede Papierbahn dieser Klasse verwendet werden können.

Die Zuordnung einer Papierbahn zu einer Klasse erfolgt vorzugsweise abhängig von dem vom zweiten Sensor 32 ermittelten Nahinfrarotspektrum, vorzugsweise mittels einer vorgegebenen oder vorgebbaren Zuordnungsvorschrift.

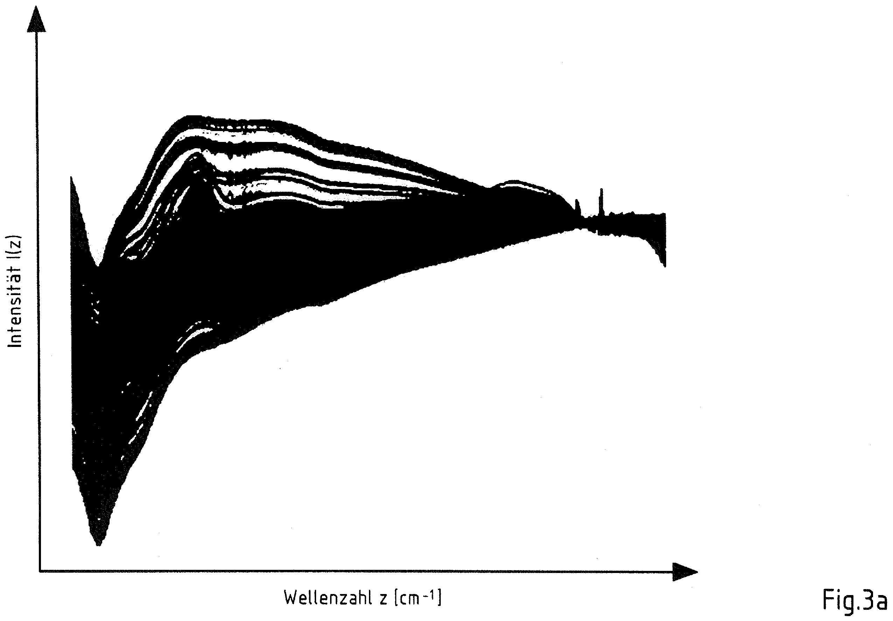

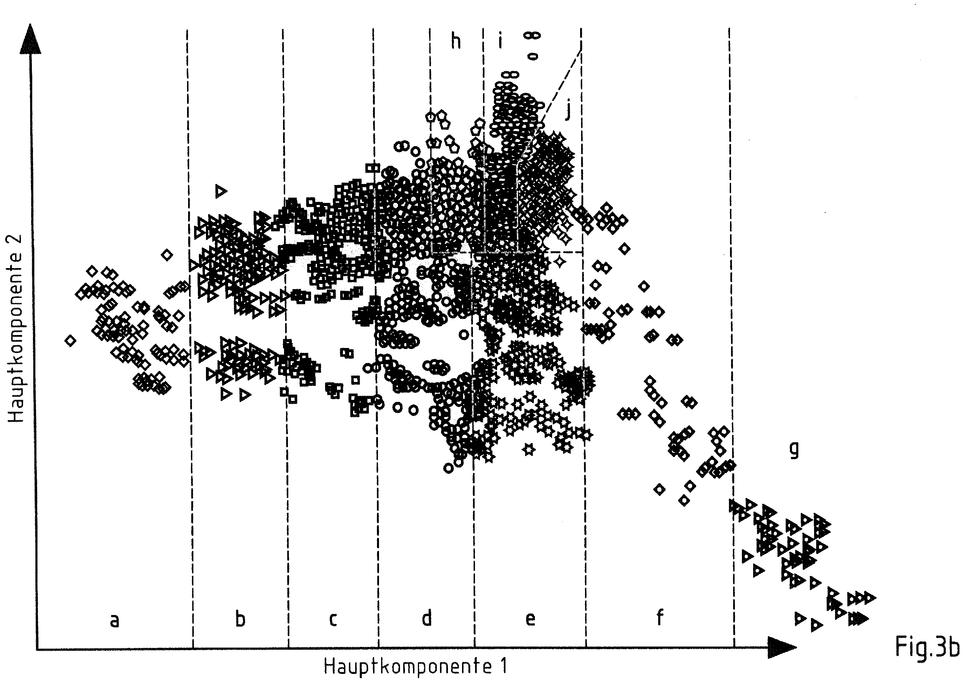

Die Fig. 3a und 3b zeigen Diagramme mit Daten von Nahinfrarotspektren von Papierbahnen zur Bestimmung einer solchen Zuordnungsvorschrift, um eine Papierbahn abhängig von dem zweiten erfassten optischen Spektralsignal einer Klasse zuzuordnen.

Fig. 3a zeigt ein Diagramm, in dem Intensitäten I(z) von Nahinfrarotspektren verschiedener Papierbahnen mit verschiedenen Papierarten und Dekoren gegen die Wellenzahl aufgetragen sind. Das Diagramm in Fig. 3a entspricht damit im Prinzip dem Diagramm in Fig. 2, wobei Fig. 3a jedoch Nahinfrarotspektren sehr verschiedenartiger Papierbahnen zeigt, deren Intensitätsverläufe entsprechend eine große Streuung aufweisen.

Fig. 3b zeigt das Ergebnis eine Hauptkomponentenanalyse der Nahinfrarotspektren aus Fig. 3a. Bei der Hauptkomponentenanalyse werden die Spektren I(z) zunächst in einen mehrdimensionalen Raum überführt, wobei die einzelnen Dimensionen den jeweils verwendeten Wellenzahlen entsprechen. Anschließend wird eine Koordinatentransformation durchgeführt, so dass der neue Ursprung im Schwerpunkt aller Spektren und die neuen Raumrichtungen entlang der größten Varianzen in den Spektren liegen. Die neuen Raumrichtungen werden auch als Hauptkomponenten bezeichnet, wobei die Hauptkomponente 1 (bzw. 2) der Raumrichtung entspricht, in der die Spektren die größte (bzw. zweitgrößte) Varianz aufweisen.

In Fig. 3b sind die Hauptkomponenten 1 und 2 der Spektren aus Fig. 3a gegeneinander aufgetragen. Jedes Dreiecksymbol in Fig. 3b entspricht somit einem Nahinfrarotspektrum aus Fig. 3a. Das Diagramm in Fig. 3b wird nun in verschiedene Bereiche aufgeteilt, beispielsweise in die in Fig. 3b gezeigten Bereiche a - j. Die jeweils in einem dieser Bereiche a - j liegenden Spektren werden einer entsprechenden Klasse a - j zugeordnet. Die Spektren einer Klasse weisen eine erheblich geringere Varianz zueinander auf als die Spektren aller Klassen. So zeigt Fig. 2 beispielsweise ausschließlich Spektren aus Klasse f, während Fig. 3a Spektren aus allen Klassen a - j zeigt. Aufgrund der geringeren Varianz der Spektren innerhalb einer Klasse können für jede Klasse jeweilige Kalibrierdaten bestimmt werden, die für alle Spektren der betreffenden Klasse geeignet sind.

Mit der Aufteilung des Diagramms in Fig. 3a wird eine Zuordnungsvorschrift definiert, mit der eine Papierbahn einer der Klassen a - j zugeordnet werden kann. Hierzu wird zunächst ein Nahinfrarotspektrum der Papierbahn über den zweiten Sensor 32 erfasst. Sodann wird bestimmt, in welchem der Bereiche a - j die Werte der Hauptkomponenten 1 und 2 des Nahinfrarotspektrums liegen, und die Papierbahn wird der entsprechenden Klasse zugeordnet. Es hat sich gezeigt, dass für die Identifikation der Papierbahn vor allem die Wellenzahlbereiche zwischen 4500-5000 cm$^{-1}$ und 7000-7500 cm$^{-1}$ relevant sind. Die Hauptkomponenten 1 und 2 repräsentieren vorzugsweise Intensitäten der Spektren bei Wellenzahlen in diesen Wellenzahlenbereichen.

Abhängig von der zugeordneten Klasse werden sodann die Kalibrierdaten dieser Klasse ausgewählt, um das Maß für die Eigenschaft, z.B. für die Restfeuchte, der durch die Imprägnieranlage laufenden Papierbahn zu bestimmen.

Mit diesen Kalibrierdaten und dem mit dem ersten Sensor 30 ermittelten ersten Spektralsignal kann dann ein Maß für eine Eigenschaft der Papierbahn 24 in zuverlässiger Weise und mit geringem Kalibrieraufwand berechnet werden.

Entsprechend können mit den Kalibrierdaten und den mit dem dritten bzw. vierten Sensor 48, 50 ermittelten dritten oder vierten Spektralsignalen jeweils Maße für eine Eigenschaft der Papierbahn 24 in zuverlässiger Weise und mit geringem Kalibrieraufwand berechnet werden.

**Patentansprüche**

1. Imprägnieranlage (10), eingerichtet zum Imprägnieren einer entlang einer Prozessstrecke (20) durch die Imprägnieranlage (10) laufenden Papierbahn (24), insbesondere einer Dekorpapierbahn, mit mindestens einem Harz, **dadurch gekennzeichnet,**

   - **dass** die Imprägnieranlage (10) einen Sensor (30) aufweist, der dazu eingerichtet ist, an einer ersten Position in der Prozessstrecke (20) ein erstes optisches Spektralsignal von der durch die Imprägnieranlage (10) laufenden Papierbahn (24) zu erfassen, und
   - **dass** die Imprägnieranlage (10) Berechnungsmittel (46) aufweist, die dazu eingerichtet sind, ein Maß für eine Eigenschaft der durch die Imprägnieranlage (10) laufenden Papierbahn (24) abhängig von dem ersten optischen Spektralsignal zu berechnen.

2. Imprägnieranlage nach Anspruch 1, **dadurch gekennzeichnet,**

   - **dass** die Imprägnieranlage (10) einen Sensor (32) aufweist, der dazu eingerichtet ist, an einer zweiten, von der ersten Position verschiedenen Position in der Prozessstrecke (20) ein zweites optisches Spektralsignal von der durch die Imprägnieranlage (10) laufenden Papierbahn (24) zu erfassen, und
   - **dass** die Berechnungsmittel (46) dazu eingerichtet sind, ein Maß für eine Eigenschaft der durch die Imprägnieranlage (10) laufenden Papierbahn (24) abhängig von dem ersten optischen Spektralsignal und von dem zweiten optischen Spektralsignal zu berechnen.

3. Imprägnieranlage nach Anspruch 1 oder 2, **dadurch gekennzeichnet,**

   - **dass** die Imprägnieranlage (12) mindestens eine Trocknungsstation (16, 18) aufweist, die dazu eingerichtet ist, die mit Harz beaufschlagte Papierbahn (24) zu trocknen, und
   - **dass** die erste Position in der Prozessstrecke (20) hinter der letzten Trocknungsstation (18) angeordnet ist.

4. Imprägnieranlage nach einem der Ansprüche 1 bis 3, **dadurch gekennzeichnet,**

   - **dass** die Imprägnieranlage (10) mindestens eine Imprägnierstation (12, 14) aufweist, die dazu eingerichtet ist, die durch die Imprägnieranlage (10) laufende Papierbahn (24) mit einem Harz zu beaufschlagen, und
   - **dass** die zweite Position in der Prozessstrecke (20) vor der ersten Imprägnierstation (12) angeordnet ist.

5. Imprägnieranlage nach einem der Ansprüche 1 bis 4, **dadurch gekennzeichnet,** **dass** es sich bei der Eigenschaft der durch die Imprägnieranlage (10) laufenden Papierbahn (24) um die Restfeuchte oder um die Beharzung der Papierbahn handelt.

6. Imprägnieranlage nach einem der Ansprüche 1 bis 5, **dadurch gekennzeichnet,** **dass** das erste und das zweite optische Spektralsignal jeweils ein Infrarotspektralsignal, insbesondere ein Nahinfrarotspektralsignal ist.

7. Imprägnieranlage nach einem der Ansprüche 1 bis 6, **dadurch gekennzeichnet,** **dass** die Berechnungsmittel (46) dazu eingerichtet sind, abhängig von dem zweiten optischen Spektralsignal Kalibrierdaten aus einer Menge gespeicherter Kalibrierdaten auszuwählen und ein Maß für eine Eigenschaft der durch die Imprägnieranlage (10) laufenden Papierbahn (24) abhängig von dem ersten optischen Spektralsignal und von den ausgewählten Kalibrierdaten zu berechnen.

8. Imprägnieranlage nach Anspruch 7,
   **dadurch gekennzeichnet,**
   **dass** die Berechnungsmittel (46) dazu eingerichtet sind, die Papierbahn abhängig von dem zweiten optischen Spektralsignal einer von einer Mehrzahl von Klassen zuzuordnen und die Kalibrierdaten abhängig von der zugeordneten Klasse auszuwählen.

9. Imprägnieranlage nach einem der Ansprüche 1 bis 8,
   **dadurch gekennzeichnet,**

   - **dass** die Imprägnieranlage (10) eine erste Imprägnierstation (12) aufweist, die dazu eingerichtet ist, die Papierbahn (24) mit einem ersten Harz zu beaufschlagen,
   - **dass** die Imprägnieranlage (10) eine zweite, in der Prozessstrecke (20) hinter der ersten Imprägnierstation (12) angeordnete zweite Imprägnierstation (14) aufweist, die dazu eingerichtet ist, die Papierbahn mit einem zweiten Harz zu beaufschlagen,
   - **dass** die Imprägnieranlage (10) einen Sensor (48) aufweist, der dazu eingerichtet ist, an einer dritten Position in der Prozessstrecke (20) ein drittes optisches Spektralsignal von der durch die Imprägnieranlage (10) laufenden Papierbahn (24) zu erfassen, wobei die dritte Position zwischen der ersten und der zweiten Imprägnierstation (12, 14) angeordnet ist, vorzugsweise hinter einer der ersten Imprägnierstation (12) in der Prozessstrecke (20) nachfolgenden Trocknungsstation (16), und
   - **dass** die Berechnungsmittel (46) dazu eingerichtet sind, ein Maß für eine Eigenschaft der durch die Imprägnieranlage laufenden Papierbahn abhängig von dem zweiten und dem dritten optischen Spektralsignal zu berechnen.

10. Imprägnieranlage nach einem der Ansprüche 1 bis 9,
    **dadurch gekennzeichnet,**

    - **dass** die Imprägnieranlage (10) eine erste Imprägnierstation (12) aufweist, die dazu eingerichtet ist, die Papierbahn (24) mit einem ersten Harz zu beaufschlagen,
    - **dass** die Imprägnieranlage (10) eine zweite, in der Prozessstrecke (20) hinter der ersten Imprägnierstation (12) angeordnete zweite Imprägnierstation (14) aufweist, die dazu eingerichtet ist, die Papierbahn (24) mit einem zweiten Harz zu beaufschlagen,
    - **dass** die Imprägnieranlage (10) einen Sensor (50) aufweist, der dazu eingerichtet ist, an einer vierten Position in der Prozessstrecke (20) ein viertes optisches Spektralsignal von der durch die Imprägnieranlage (10) laufenden Papierbahn (24) zu erfassen, wobei die vierte Position zwischen der zweiten Imprägnierstation (14) und einer der zweiten Imprägnierstation (14) in der Prozesstrecke nachfolgenden Trocknungsstation (18) angeordnet ist, und
    - **dass** die Berechnungsmittel dazu eingerichtet sind, ein Maß für eine Eigenschaft der durch die Imprägnieranlage laufenden Papierbahn abhängig von dem zweiten und von dem vierten optischen Spektralsignal zu berechnen.

11. Imprägnieranlage nach einem der Ansprüche 1 bis 10,
    **dadurch gekennzeichnet,**
    **dass** sich mindestens zwei Sensoren (30, 32, 48, 50) der Imprägnieranlage (10) ein optisches Spektrometer (44) teilen.

12. Imprägnieranlage nach einem der Ansprüche 1 bis 11,
    **dadurch gekennzeichnet,**
    **dass** die Imprägnieranlage (10) eine Steuerung aufweist, die dazu eingerichtet ist, ein Verfahren nach Anspruch 13 oder 14 durchzuführen.

13. Verfahren zur Überwachung einer Imprägnieranlage (10), die dazu eingerichtet ist, eine entlang einer Prozessstrecke (20) durch die Imprägnieranlage (10) laufende Papierbahn (24) mit mindestens einem Harz zu imprägnieren, insbesondere zur Überwachung einer Imprägnieranlage nach einem der Ansprüche 1 bis 12,

    - bei dem an einer ersten Position in der Prozessstrecke (20) ein erstes optisches Spektralsignal von der durch die Imprägnieranlage (10) laufenden Papierbahn (24), insbesondere Dekorpapierbahn, erfasst wird, und
- bei dem ein Maß für eine Eigenschaft der durch die Imprägnieranlage (10) laufenden Papierbahn (24) abhängig von dem ersten optischen Spektralsignal berechnet wird.

**14.** Verfahren nach Anspruch 13,

- bei dem an einer zweiten, von der ersten Position verschiedenen Position in der Prozessstrecke (20) ein zweites optisches Spektralsignal von der durch die Imprägnieranlage (10) laufenden Papierbahn (24) erfasst wird und
- bei dem ein Maß für eine Eigenschaft der durch die Imprägnieranlage (10) laufenden Papierbahn (24) abhängig von dem ersten optischen Spektralsignal und von dem zweiten optischen Spektralsignal berechnet wird.

**15.** Verfahren nach Anspruch 13 oder 14,
**dadurch gekennzeichnet,**
**dass** die Imprägnieranlage (10) abhängig von dem Maß für die Eigenschaft der durch die Imprägnieranlage laufenden Papierbahn gesteuert wird.


**Claims**

**1.** Impregnation system (10) configured to impregnate a paper web (24), in particular a decorative paper web, the paper web running along a process line (20) through the impregnation system (10), with at least one resin, **characterised in**

- **that** the impregnation system (10) has a sensor (30) configured to record a first optical spectral signal from the paper web (24) running through the impregnation system (10) at a first position in the process line (20), and
- **that** the impregnation system (10) has calculation means (46) configured to calculate a measure of a property of the paper web (24) running through the impregnation system (10) as a function of the first optical spectral signal.

**2.** Impregnation system according to Claim 1,
**characterised in**

- **that** the impregnation system (10) has a sensor (32) configured to record a second optical spectral signal from the paper web (24) running through the impregnation system (10) at a second position in the process line (20) that is different from the first position, and
- **that** the calculation means (46) are configured to calculate a measure of a property of the paper web (24) running through the impregnation system (10) as a function of the first optical spectral signal and of the second optical spectral signal.

**3.** Impregnation system according to Claim 1 or 2,
**characterised in**

- **that** the impregnation system (12) has at least one drying station (16, 18) configured to dry the paper web (24) to which resin has been applied, and
- **that** the first position in the process line (20) is arranged downstream from the last drying station (18).

**4.** Impregnation system according to any one of Claims 1 to 3,
**characterised in**

- **that** the impregnation system (10) has at least one impregnating station (12, 14) configured to apply a resin to the paper web (24) running through the impregnation system (10), and
- **that** the second position in the process line (20) is arranged upstream from the first impregnating station (12).

**5.** Impregnation system according to any one of Claims 1 to 4,
**characterised in that**
the property of the paper web (24) running through the impregnation system (10) is residual moisture or the resin coating of the paper web.

**6.** Impregnation system according to any one of Claims 1 to 5,
**characterised in that**
the first and the second optical spectral signal are infrared spectral signals respectively, in particular near infrared spectral signals.

**7.** Impregnation system according to any one of Claims 1 to 6,
**characterised in that**
the calculation means (46) are configured to select calibration data from a set of stored calibration data as a function of the second optical spectral signal and to calculate a measure for a property of the paper web (24) running through the impregnation system (10) as a function of the first optical spectral signal and of the selected calibration data.

**8.** Impregnation system according to Claim 7,
**characterised in that**
the calculation means (46) are configured to assign the paper web to one of a plurality of classes as a function of the second optical spectral signal and to select the calibration data as a function of the class assigned.

**9.** Impregnation system according to any one of Claims 1 to 8,
**characterised in**

- **that** the impregnation system (10) has a first impregnating station (12) configured to apply a first resin to the paper web (24),
- **that** the impregnation system (10) has a second impregnating station (14) arranged in the process line (20) downstream from the first impregnating station (12), which is configured to apply a second resin to the paper web,
- **that** the impregnation system (10) has a sensor (48), which is arranged so as to record a third optical spectral signal from the paper web (24) running through the impregnation system (10) at a third position in the process line (20), wherein the third position is arranged between the first and the second impregnating station (12, 14), preferably downstream from a drying station (16) following the first impregnating station (12) in the process line (20), and
- **that** the calculation means (46) are configured to calculate a measure for a property of the paper web running through the impregnation system as a function of the second and the third optical spectral signal.

**10.** Impregnation system according to any one of Claims 1 to 9,
**characterised in**

- **that** the impregnation system (10) has a first impregnating station (12) configured to apply a first resin to the paper web (24),
- **that** the impregnation system (10) has a second impregnating station (14) arranged in the process line (20) downstream from the first impregnating station (12), which is configured to apply a second resin to the paper web (24),
- **that** the impregnation system (10) has a sensor (50) configured to record a fourth optical spectral signal from the paper web (24) running through the impregnation system (10) at a fourth position in the process line (20), wherein the fourth position is arranged between the second impregnating station (14) and a drying station (18) following the second impregnating station (14) in the process line, and
- **that** the calculating means are configured to calculate a measure for a property of the paper web running through the impregnation system as a function of the second and of the fourth optical spectral signal.

**11.** Impregnation system according to any one of Claims 1 to 10,
**characterised in that**
at least two sensors (30, 32, 48, 50) of the impregnation system (10) share an optical spectrometer (44).

**12.** Impregnation system according to any one of Claims 1 to 11,
**characterised in that**
the impregnation system (10) has a control system configured to implement a method according to Claim 13 or 14.

**13.** Method for monitoring an impregnation system (10) which is configured to impregnate a paper web (24) running along a process line (20) through the impregnation system (10) with at least one resin, in particular to monitor an impregnation system according to any one of Claims 1 to 12,

- in which a first optical spectral signal from the paper web (24), in particular a decorative paper web, running through the impregnation system (10) is recorded at a first position in the process line (20), and
- in which a measure for a property of the paper web (24) running through the impregnation system (10) is calculated as a function of the first optical spectral signal.

**14.** Method according to Claim 13,

- in which a second optical spectral signal from the paper web (24) running through the impregnation system (10) is recorded at a second position in the process line (20) that is different from the first position and
- in which a measure is calculated for a property of the paper web (24) running through the impregnation system (10) as a function of the first optical spectral signal and of the second optical spectral signal.

**15.** Method according to Claim 13 or 14,
**characterised in that**
the impregnation system (10) is controlled a a function of the measure for the property of the paper web running through the impregnation system.


**Revendications**

**1.** Système d'imprégnation (10), conçu pour imprégner une bande de papier (24), en particulier une bande de papier décoratif, qui défile à travers le système d'imprégnation (10) le long d'un parcours de processus (20), avec au moins une résine,
**caractérisé en ce**

- **que** le système d'imprégnation (10) présente un capteur (30) qui est conçu pour acquérir, au niveau d'une première position dans le parcours de processus (20), un premier signal spectral optique provenant de la bande de papier (24) qui défile à travers le système d'imprégnation (10), et
- **que** le système d'imprégnation (10) présente des moyens de calcul (46) qui sont conçus pour calculer une mesure pour une propriété de la bande de papier (24) qui défile à travers le système d'imprégnation (10) en fonction du premier signal spectral optique.

**2.** Système d'imprégnation selon la revendication 1,
**caractérisé en ce**

- **que** le système d'imprégnation (10) présente un capteur (32) qui est conçu pour acquérir, au niveau d'une deuxième position, différente de la première position, dans le parcours de processus (20), un deuxième signal spectral optique provenant de la bande de papier (24) qui défile à travers le système d'imprégnation (10), et
- **que** les moyens de calcul (46) sont conçus pour calculer une mesure pour une propriété de la bande de papier (24) qui défile à travers le système d'imprégnation (10) en fonction du premier signal spectral optique et du deuxième signal spectral optique.

**3.** Système d'imprégnation selon la revendication 1 ou 2,
**caractérisé en ce**

- **que** le système d'imprégnation (12) présente au moins une station de séchage (16,18) qui est conçue pour sécher la bande de papier (24) chargée de résine, et
- **que** la première position dans le parcours de processus (20) est disposée derrière la dernière station de séchage (18).

**4.** Système d'imprégnation selon l'une des revendications 1 à 3,
**caractérisé en ce**

- **que** le système d'imprégnation (10) présente au moins une station d'imprégnation (12,14) qui est conçue pour charger la bande de papier (24) qui défile à travers le système d'imprégnation (10) avec une résine, et
- **que** la deuxième position dans le parcours de processus (20) est disposée devant la première station d'imprégnation (12).

5. Système d'imprégnation selon l'une des revendications 1 à 4,
**caractérisé en ce**
**que** la propriété de la bande de papier (24) qui défile à travers le système d'imprégnation (10) est l'humidité résiduelle ou le taux d'imprégnation de résine de la bande de papier.

6. Système d'imprégnation selon l'une des revendications 1 à 5,
**caractérisé en ce**
**que** le premier et le deuxième signal spectral optique est respectivement un signal spectral infrarouge, en particulier un signal spectral dans le proche infrarouge.

7. Système d'imprégnation selon l'une des revendications 1 à 6,
**caractérisé en ce**
**que** les moyens de calcul (46) sont conçus pour sélectionner des données d'étalonnage parmi un ensemble de données d'étalonnage enregistrées en fonction du deuxième signal spectral optique et pour calculer une mesure pour une propriété de la bande de papier (24) qui défile à travers le système d'imprégnation (10) en fonction du premier signal spectral optique et des données d'étalonnage sélectionnées.

8. Système d'imprégnation selon la revendication 7,
**caractérisé en ce**
**que** les moyens de calcul (46) sont conçus pour attribuer à la bande de papier l'une parmi une pluralité de catégories en fonction du deuxième signal spectral optique et pour sélectionner les données d'étalonnage en fonction de la catégorie attribuée.

9. Système d'imprégnation selon l'une des revendications 1 à 8,
**caractérisé en ce**

- **que** le système d'imprégnation (10) présente une première station d'imprégnation (12) qui est conçue pour charger la bande de papier (24) avec une première résine,
- **que** le système d'imprégnation (10) présente une deuxième station d'imprégnation (14) disposée derrière la première station d'imprégnation (12) dans le parcours de processus (20), qui est conçue pour charger la bande de papier avec une deuxième résine,
- **que** le système d'imprégnation (10) présente un capteur (48) qui est conçu pour acquérir, au niveau d'une troisième position dans le parcours de processus (20), un troisième signal spectral optique provenant de la bande de papier (24) qui défile à travers le système d'imprégnation (10), la troisième position étant disposée entre la première et la deuxième station d'imprégnation (12,14), de préférence derrière une station de séchage (16) qui suit la première station d'imprégnation (12) dans le parcours de processus (20), et
- **que** les moyens de calcul (46) sont conçus pour calculer une mesure pour une propriété de la bande de papier qui défile à travers le système d'imprégnation en fonction du deuxième et du troisième signal spectral optique.

10. Système d'imprégnation selon l'une des revendications 1 à 9,
**caractérisé en ce**

- **que** le système d'imprégnation (10) présente une première station d'imprégnation (12) qui est conçue pour charger la bande de papier (24) avec une première résine,
- **que** le système d'imprégnation (10) présente une deuxième station d'imprégnation (14) disposée derrière la première station d'imprégnation (12) dans le parcours de processus (20), qui est conçue pour charger la bande de papier (24) avec une deuxième résine,
- **que** le système d'imprégnation (10) présente un capteur (50) qui est conçu pour acquérir, au niveau d'une quatrième position dans le parcours de processus (20), un quatrième signal spectral optique provenant de la bande de papier (24) qui défile à travers le système d'imprégnation (10), la quatrième position étant disposée entre la deuxième station d'imprégnation (14) et une station de séchage (18) qui suit la deuxième station d'imprégnation (14) dans le parcours de processus, et
- **que** les moyens de calcul sont conçus pour calculer une mesure pour une propriété de la bande de papier qui défile à travers le système d'imprégnation en fonction du deuxième et du quatrième signal spectral optique.

11. Système d'imprégnation selon l'une des revendications 1 à 10,
**caractérisé en ce**
**qu'**au moins deux capteurs (30, 32, 48, 50) du système d'imprégnation (10) se partagent un spectromètre optique (44).

**12.** Système d'imprégnation selon l'une des revendications 1 à 11,
**caractérisé en ce**
**que** le système d'imprégnation (10) présente une commande qui est conçue pour mettre en oeuvre un procédé selon la revendication 13 ou 14.

**13.** Procédé pour surveiller un système d'imprégnation (10) qui est conçu pour imprégner une bande de papier (24) qui défile à travers le système d'imprégnation (10) le long d'un parcours de processus (20) avec au moins une résine, en particulier pour surveiller un système d'imprégnation selon l'une des revendications 1 à 12,

- selon lequel un premier signal spectral optique provenant de la bande de papier (24) qui défile à travers le système d'imprégnation (10) est acquis au niveau d'une première position dans le parcours de processus (20), et
- selon lequel une mesure pour une propriété de la bande de papier (24) qui défile à travers le système d'imprégnation (10) est calculée en fonction du premier signal spectral optique.

**14.** Procédé selon la revendication 13,

- selon lequel un deuxième signal spectral optique provenant de la bande de papier (24) qui défile à travers le système d'imprégnation (10) est acquis au niveau d'une deuxième position, différente de la première position, dans le parcours de processus (20), et
- selon lequel une mesure pour une propriété de la bande de papier (24) qui défile à travers le système d'imprégnation (10) est calculée en fonction du premier signal spectral optique et du deuxième signal spectral optique.

**15.** Procédé selon la revendication 13 ou 14,
**caractérisé en ce**
**que** le système d'imprégnation (10) est commandé en fonction de la mesure pour la propriété de la bande de papier qui défile à travers le système d'imprégnation.

Fig.1

EP 3 075 906 B1

Fig.2

Fig.3a

Wellenzahl z [cm$^{-1}$]

Intensität I(z)

Fig.3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0807809 A2

**In der Beschreibung aufgeführte Nicht-Patentliteratur**

- Prozessanalytik: Strategien und Fallbeispiele aus der industriellen Praxis. 2006